# EUROPEAN PATENT SPECIFICATION

(11) **EP 3 159 160 B1**
(45) Date of publication and mention of the grant of the patent: **04.07.2018**
(21) Application number: 15809976.2
(22) Date of filing: 01.05.2015
(51) Int. Cl.: B32B 25/08, B32B 27/30, B60C 1/00, C08F 8/00, C08F 16/06

(54) **LAMINATE AND TIRE**
LAMINAT UND REIFEN
STRATIFIÉ, ET PNEUMATIQUE

(30) Priority: 17.06.2014 JP 2014124722
(43) Date of publication of application: 26.04.2017
(73) Proprietor: Bridgestone Corporation, Tokyo 104-8340 (JP)
(72) Inventor: NISHII, Masayuki, Tokyo 104-8340 (JP)
(74) Representative: Lang, Johannes
(86) International application number: PCT/JP2015/002309
(87) International publication number: WO 2015/194085

(56) References cited:
- EP-A1- 2 439 067
- EP-A1- 3 156 437
- JP-A- H05 229 064
- JP-A- 2012 036 244
- JP-A- 2012 250 554
- JP-A- 2013 006 387
- US-A- 5 073 419
- US-A- 5 149 591
- US-A- 5 524 671

## Description

### TECHNICAL FIELD

The disclosure relates to a laminate and a tire.

### BACKGROUND

Ozone cracking is one of the factors that cause the deterioration of tires. Ozone cracking is a phenomenon that the main chain of rubber breaks due to ozone in the air and as a result a crack occurs. Ozone cracking is frequently found in diene-based polymers such as polybutadiene, polyisoprene, and styrene-butadiene. Since a break of the polymer main chain appears as a crack that is visible in a product, ozone cracking is a significant problem in terms of tire durability.

Some techniques have been conventionally developed to protect the rubber surface from such deterioration caused by ozone. For example, Patent Literature (PTL) 1 discloses a composition that contains styrene-polyacrylic ester copolymer as a main component and further contains silica microparticles.

However, the composition disclosed in PTL 1 does not have a sufficient barrier function against ozone gas, and cannot suppress cracking caused by ozone gas when a dynamic input is applied or the elongation is 20% or more.

Barrier materials having hydrogen bonding, such as polyamide resin, cellulose resin, polyvinyl alcohol, and ethylene polyvinyl alcohol, are capable of providing excellent gas barrier property reflecting the strength of intermolecular interaction between main chains.

Such barrier resins are, however, not sufficient in flexibility, fatigue resistance, and adhesion to other material when used in various industrial products. For example, in applications where a barrier material undergoes many cyclic deformations on a rubber base such as in tires, the fatigue strength of the barrier material and the adhesion of the barrier material to the rubber are problematic. Attempts have therefore been made to improve these performance.

As a technique for improving the flexibility of a barrier material, for example, PTL 1 discloses a multilayer structure formed by alternately laminating a layer made of a barrier material and a flexible elastomer layer to achieve both gas barrier property and flexibility.

As a technique for improving the adhesion of a barrier material, for example, PTL 2 discloses a resin composition containing ethylene vinyl alcohol copolymer, thermoplastic polyester resin, thermoplastic resin having a carbon-carbon double bond, and transition metal salt to improve gas barrier property and interlayer adhesion.

### CITATION LIST

### Patent Literatures

PTL 1: JP H08-245852 A
PTL 2: JP 2013-71968 A

### SUMMARY

### (Technical Problem)

However, the technique in PTL 2 has a problem of a decrease in strength as a result of repeated flex (poor fatigue resistance), because of insufficient interface strength between domains phase-separated in the composition. Besides, for use as a tire member, further improvement in flexibility is desired.

It could therefore be helpful to provide a laminate having high ozone crack resistance and excellent in flexibility and fatigue resistance, and a tire using the laminate and thus having excellent ozone crack resistance, flexibility, adhesion, and fatigue resistance.

### (Solution to Problem)

As a result of extensive research for a laminate comprising a rubber layer and a coating film, we discovered the following: A coating film containing modified polyvinyl alcohol obtained by grafting a functional group having a specific structure and molecular weight as grafted chains onto a main chain of polyvinyl alcohol having excellent gas barrier property has excellent effect in flexibility as in the case of blend of a barrier resin and synthetic rubber. Moreover, since the bond between the barrier resin and the functional group is formed by the grafting reaction, the interface strength between microdomains is higher than that of the blend system, which contributes to further improved fatigue resistance.

The disclosure is based on these discoveries. We thus provide the following:
A laminate includes: a coating film containing modified polyvinyl alcohol grafted by a functional group that is linear-chain, cycloaliphatic, branched or aromatic and has a molecular weight of 20 to 10000; and a rubber layer in contact with the coating film.
Such a laminate has excellent ozone crack resistance, flexibility, and fatigue resistance.

Preferably, a carbon number of the functional group used for the grafting is 3 to 20. This ensures more excellent flexibility and fatigue resistance.

Preferably, a proportion of introducing the functional group used for the grafting is 0.5 mol% to 50 mol% with respect to a vinyl alcohol unit in a main chain of the modified polyvinyl alcohol. This ensures both excellent ozone crack resistance and excellent flexibility and fatigue resistance.

Preferably, the modified polyvinyl alcohol is further grafted by an acrylic group-containing oligosilanol group, and a proportion of introducing the acrylic group-containing oligosilanol group is 0.5 mol% to 10 mol% with respect to a vinyl alcohol unit in a main chain of the modified polyvinyl alcohol. This ensures more excellent interlayer adhesion.

Preferably, a molecular weight of a main chain of the modified polyvinyl alcohol is 10000 or more. This ensures more excellent ozone crack resistance.

Preferably, the laminate further includes a colored layer above or below the coating film. Desired design characteristics can be realized in this way.

A tire uses the aforementioned laminate.

Such a tire has excellent ozone crack resistance, flexibility, and fatigue resistance.

### (Advantageous Effect)

It is thus possible to provide a laminate having high ozone crack resistance and excellent in flexibility and fatigue resistance, and a tire using the laminate and thus having excellent ozone crack resistance, flexibility, and fatigue resistance.

### BRIEF DESCRIPTION OF THE DRAWINGS

In the accompanying drawing:

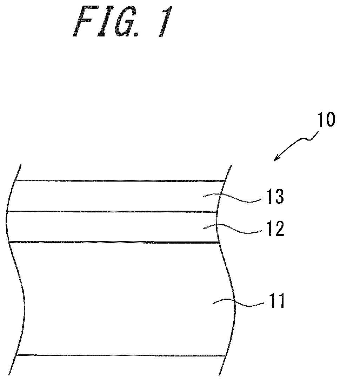

FIG. 1 is a diagram schematically illustrating the structure of a laminate according to one of the disclosed embodiments.

### DETAILED DESCRIPTION

The following describes one of the disclosed embodiments in detail.

### <Laminate>

As illustrated in FIG. 1, a laminate 10 includes a coating film 12 and a rubber layer 11 in contact with the coating film.

### (Coating film)

The coating film included in the laminate according to the disclosure contains modified polyvinyl alcohol grafted by a functional group that is linear-chain, cycloaliphatic, branched, or aromatic and has a molecular weight of 20 to 10000.

Such a structure can improve ozone crack resistance, flexibility, and fatigue resistance.

The main chain of polyvinyl alcohol and the grafted chain (or chains) of the functional group that is linear-chain, cycloaliphatic, branched, or aromatic and has a molecular weight of 20 to 10000 (hereafter referred to as "functional group" or "functional group according to the disclosure" as appropriate), which constitute the modified polyvinyl alcohol, are incompatible in a bulk state. Accordingly, the obtained modified polyvinyl alcohol forms a micro phase separation structure formed by the polyvinyl alcohol and the linear-chain, cycloaliphatic, branched, or aromatic compound with a molecular weight of 20 to 10000 forming the functional group. For example, in the case where the resin as the main chain has a higher volume occupation, a sea-island structure in which the resin part correspond to the sea and the compound part with a molecular weight of 20 to 10000 correspond to the islands is formed. In the case where the resin as the main chain has a lower volume occupation, a formed sea-island structure is opposite of above sea-island structure in the case of the main chain having a higher volume occupation.

In the case where the aforementioned micro phase separation structure is formed, the same advantageous effects as in the case where the two components are blended are achieved. In detail, gas barrier property and ozone crack resistance are improved by the effect of the polyvinyl alcohol, and flexibility is improved by the effect of the compound part with a molecular weight of 20 to 10000 (the functional group according to the disclosure).

Moreover, in the obtained modified polyvinyl alcohol, the main chain of polyvinyl alcohol and the grafted chain made of the functional group according to the disclosure chemically form a bond, which contributes to higher interface strength between microdomains than the blend system. Hence, fatigue resistance can be improved as compared with, for example, a conventional blend of polyvinyl alcohol resin and elastomer material.

The grafting site (reactive site) of the functional group according to the disclosure to the main chain of polyvinyl alcohol is preferably the terminal part. This makes it possible to maintain or add solvent solubility. For example, when forming the coating film according to the disclosure on the rubber layer, the process can be performed in a paint state.

To improve flexibility and fatigue resistance while maintaining excellent ozone crack resistance, the proportion of introducing the functional group used for the grafting is preferably 0.5 mol% to 50 mol% with respect to the vinyl alcohol unit of the main chain. If the proportion of introducing the functional group is less than 0.5 mol%, the amount of the functional group is insufficient, and so there is a possibility that desired flexibility and fatigue resistance cannot be achieved. If the proportion of introducing the functional group is more than 50 mol%, the amount of hydroxyl group derived from the polyvinyl alcohol is insufficient, and so there is a possibility that desired ozone crack resistance cannot be achieved.

The polyvinyl alcohol is not particularly limited, and may be a homopolymer composed of only the vinyl alcohol unit, or a copolymer (hereafter also referred to as "PVA copolymer") composed of vinyl alcohol and a monomer copolymerizable with the vinyl alcohol. A single type of these polyvinyl alcohol resins may be used, or two or more types may be used in combination. The production method of the polyvinyl alcohol resin is not particularly limited. For example, the polyvinyl alcohol resin may be obtained by saponifying a vinyl ester polymer such as polyvinyl acetate. Examples of a vinyl ester monomer for forming the vinyl ester unit include vinyl formate, vinyl acetate, vinyl propionate, vinyl valerate, vinyl caprate, vinyl laurate, vinyl stearate, vinyl benzoate, vinyl pivalate, and vinyl versatate. Of these, vinyl acetate is preferable as PVA can be obtained with good productivity.

Examples of the copolymerizable monomer in the PVA copolymer include: α-olefins such as ethylene, propylene, 1-butene, isobutene, and 1-hexene; acrylic acid and salts thereof; acrylic esters such as methyl acrylate, ethyl acrylate, n-propyl acrylate, and i-propyl acrylate; methacrylic acid and salts thereof; methacrylic esters such as methyl methacrylate, ethyl methacrylate, n-propyl methacrylate, and i-propyl methacrylate; acrylamide derivatives such as acrylamide, N-methylacrylamide, and N-ethylacrylamide; methacrylamide derivatives such as methacrylamide, N-methyl methacrylamide, and N-ethyl methacrylamide; vinyl ethers such as methyl vinyl ether, ethyl vinyl ether, n-propyl vinyl ether, i-propyl vinyl ether, and n-butyl vinyl ether; hydroxy group-containing vinyl ethers such as ethylene glycol vinyl ether, 1,3-propanediol vinyl ether, and 1,4-butanediol vinyl ether; allyl ethers such as allyl acetate, propyl allyl ether, butyl allyl ether, and hexyl allyl ether; monomers having an oxyalkylene group such as polyoxyethylene group, polyoxypropylene group, and polyoxybutylene group; vinylsilanes such as vinyltrimethoxysilane; hydroxy group-containing α-olefines such as isopropenyl acetate, 3-butene-1-ol, 4-pentene-1-ol, 5-hexene-1-ol, 7-octene-1-ol, 9-decene-1-ol, and 3-methyl-3-butene-1-ol or esters thereof; N-vinylamides such as N-vinylformamide, N-vinylacetamide, and N-vinylpyrrolidone; monomers having a carboxyl group derived from fumaric acid, maleic acid, itaconic acid, maleic anhydride, phthalic anhydride, trimellitic anhydride, itaconic acid anhydride, or the like; monomers having a sulfonate group derived from ethylene sulfonic acid, allylsulfonic acid, methallylsulfonic acid, 2-acrylamide-2-methylpropanesulfonic acid, or the like; and monomers having a cationic group derived from vinyloxyethyltrimethylammonium chloride, vinyloxybutyltrimethylammonium chloride, vinyloxyethyldimethylamine, vinyloxymethyldiethylamine, N-acrylamidemethyltrimethylammonium chloride, N-acrylamideethyltrimethylammonium chloride, N-acrylamidedimethylamine, allyltrimethylammonium chloride, methallyltrimethylammonium chloride, dimethylallylamine, allylethylamine, or the like.

The content of such copolymerizable monomer unit (hereafter also referred to as "comonomer unit") is preferably 20 mol% or less and more preferably 10 mol% or less in the total monomer unit of 100 mol% constituting the PVA copolymer. The content of the comonomer unit is preferably 0.01 mol% or more, to benefit from copolymerization

The polyvinyl alcohol may be completely saponified or partially saponified, that is, a partially saponified polyvinyl alcohol resin. The saponification degree is preferably 60 mol% or more, more preferably 95 mol% or more, further preferably 99 mol% or more, and particularly preferably 99.5 mol% or more, in terms of hue, fisheye reduction, and the surface smoothness of the formed product and film made of the composition.

The molecular weight of the polyvinyl alcohol is preferably 10000 or more and more preferably 100000 or more, to ensure strength and prevent the entrance of ozone gas when used as the coating film.

The functional group that is linear-chain, cycloaliphatic, branched, or aromatic and has a molecular weight of 20 to 10000 in the modified polyvinyl alcohol imparts flexibility and fatigue resistance to the coating film according to the disclosure, when introduced as the grafted chain.

The carbon number of the functional group used for the grafting is preferably 3 to 20 and more preferably 4 to 18, to provide more excellent flexibility and fatigue resistance.

In detail, the functional group is preferably composed of a butyl glycidyl group, a stearoyl group, a caproyl group, a hexanoyl group, a lauryl group, a palmityl group, an isovaleryl group, and a cyclohexanecarbonyl group.

The modified polyvinyl alcohol may further have a grafted group other than the aforementioned functional group (the functional group that is linear-chain, cycloaliphatic, branched, or aromatic and has a molecular weight of 20 to 10000).

For example, it is preferable to further graft an acrylic group-containing oligosilanol group onto the main chain of polyvinyl alcohol so that the proportion of introducing the acrylic group-containing oligosilanol group is 0.5 mol% to 10 mol% with respect to the vinyl alcohol unit of the main chain, in order to further improve interlayer adhesion.

Regarding the modified polyvinyl alcohol forming the coating film according to the disclosure, the grafting reaction method for grafting the functional group that is linear-chain, cycloaliphatic, branched, or aromatic and has a molecular weight of 20 to 10000 onto the main chain of polyvinyl alcohol is not particularly limited, and may be a known organic chemical reaction such as esterification reaction, epoxy ring-opening reaction, or acid anhydride reaction.

As an example of the grafting reaction method, a compound having a carboxyl group is selected as the graft compound, and an esterification reaction with the polyvinyl alcohol hydroxyl group of the main chain is performed using an esterification agent.

The coating film included in the laminate according to the disclosure may contain various fillers other than the aforementioned modified polyvinyl alcohol. The fillers include silica, and for example, carbon black, and clay.

Of these fillers, silica is preferable as it is expected to improve the reinforcing effect. The average primary particle size of the silica measured by a transmission electron microscope (TEM) is preferably 30 nm to 120 nm and more preferably 40 nm to 100 nm.

Carbon black is also preferably used as a filler as it produces a favorable reinforcing action. Examples of the type of carbon black include N660, N772, N762, and N754. Carbon black having the following colloidal characteristics is more preferable: The iodine adsorption (IA) is preferably 40 mg/g or less and more preferably about 35 mg/g to 20 mg/g, and the dibutyl phthalate oil absorption (DBP) is preferably 100 ml/100g or less and more preferably in the range of 70 ml/100g to 30 ml/100g. In the colloidal characteristics, IA is measured according to ASTM D1510-95, and DBP is measured according to ASTM D2414-97.

### (Rubber layer)

The rubber layer included in the laminate according to the disclosure is a member in contact with the coating film.

The rubber layer is preferably formed by using a rubber composition that contains a rubber component having an unsaturated carbon bond in the main chain, to ensure the adhesion to the coating film.

The rubber component having an unsaturated carbon bond in the main chain is, for example, natural rubber or synthetic rubber. Examples of the synthetic rubber include diene-based rubber such as synthetic polyisoprene rubber, styrene-butadiene rubber, and polybutadiene rubber, and butyl-based rubber. A single type of these rubber components may be used, or two or more types may be used in combination.

In the rubber composition forming the rubber layer, 15 mass% or more of the rubber component is preferably non-diene based rubber. In the case where 15 mass% or more of the rubber component is non-diene based rubber, the weather resistance of the rubber layer is improved significantly.

The content of an age resistor as an optional component in the rubber composition forming the rubber layer is preferably 0 parts to 1.5 parts by mass and more preferably less than 1.0 parts by mass with respect to 100 parts by mass the rubber component (A). If the content of the age resistor is more than 1.5 parts by mass with respect to 100 parts by mass the rubber component (A), the movement of the age resistor to the surface side increases, which may hamper ultraviolet curing by ultraviolet curable paint suitably used for the formation of the coating film and decrease the adhesion between the coating film and the rubber layer. If the content of the age resistor is less than 1.0 parts by mass with respect to 100 parts by mass the rubber component (A), ultraviolet curing by ultraviolet curable paint is made particularly favorably, with it being possible to further improve the adhesion between the coating film and the rubber layer.

### Examples of the age resistor include

N-phenyl-N'-(1,3-dimethylbutyl)-p-phenylenediamine (6PPD), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), N,N'-di-sec-butyl-p-phenylenediamine, and N-phenyl-N'-(methylheptyl)-p-phenylenediamine.

In addition to the aforementioned rubber component and age resistor, the rubber composition forming the rubber layer may selectively contain, as appropriate, compounding agents typically used in the rubber industry, e.g. fillers such as carbon black, vulcanizing agents such as sulfur, vulcanization accelerators, process oil, anti-scorch agents, zinc oxide, and stearic acid, within the range that does not interfere with the object of the disclosure. Commercial products may be suitably used as these compounding agents.

The rubber composition can be produced by kneading, warming, extruding, etc. the rubber component together with the compounding agents selected as appropriate.

### (Colored layer)

As illustrated in FIG. 1, the laminate according to the disclosure preferably further includes a colored layer 13 above or below the coating film 12 (above the coating film 12 in FIG. 1). The laminate can thus be provided with desired decorativeness or visibility.

The colored layer is not particularly limited as long as it is capable of coloring. For example, the colored layer is formed by including any of various coloring agents in a rubber component, a polythiol compound, UV-curable ink, or the like as a base.

The coloring agent may be an organic or inorganic pigment or dye. The inorganic pigment is, for example, titanium oxide. Examples of a white coloring agent include titanium oxide, antimony white, and zinc sulfide. Examples of a red coloring agent include red iron oxide, cadmium red, red lead, mercury sulfide, cadmium, permanent red 4R, lithol red, pyrazolone red, watching red, calcium salt, lake red D, brilliant carmine 6B, eosine lake, rhodamine lake B, alizaline lake, brilliant carmine 3B, and C.I. pigment red 2. Examples of a blue coloring agent include C.I. pigment blue 15:3, C.I. pigment blue 15, prussian blue, cobalt blue, alkali blue lake, Victoria blue lake, phthalocyanine blue, metal-free phthalocyanine blue, partially chlorinated phthalocyanine blue, first sky blue, and indanthrene blue BC. Examples of a yellow coloring agent include chrome yellow, zinc yellow, cadmium yellow, yellow oxide, mineral first yellow, nickel titanium yellow, navel yellow, naphthol yellow S, Hansa yellow G, Hansa yellow 10G, benzidine yellow G, benzidine yellow GR, quinoline yellow lake, permanent yellow NCG, tartrazine lake, and C.I. pigment yellow 12.

### (Tire)

A tire according to the disclosure uses the laminate according to the disclosure.

For example, in a pneumatic tire including: a pair of bead portions; a pair of sidewall portions; a tread portion connected to both sidewall portions; a carcass toroidally extending between bead cores buried in the respective bead portions; and a belt located on the tire radial outer side of the crown portion of the carcass, the laminate may be used in the surface part of the sidewall portions.

The tire according to the disclosure may use the laminate according to the disclosure not only as the sidewall portions but also as, for example, the inner liner of the tire.

### EXAMPLES

The disclosed techniques are described in more detail below using examples, although the disclosure is not limited to these examples.

### (Examples 1 to 9)

1 g PVA particles (Poval PVA117 made by Kuraray Co., Ltd.) were heated to melt in 30 mL DMSO (dimethylsulfoxide). After this, butyl glycidyl ether was added by the amount shown in Table 1 (functional group compound addition amount (g)), 0.01 g tris(pentafluorophenyl)boron was added, and the mixture was stirred at 80 °C for 6 hours. The reaction solution was subjected to reprecipitation in 500 mL methanol and filtration twice, and the solid was collected and dried to obtain a sample of modified polyvinyl alcohol of each example. The molecular weight (× 10³) of the main chain of the modified polyvinyl alcohol and the functional group introduction rate (mol%) of the modified polyvinyl alcohol are also shown in Table 1.

The sample of modified polyvinyl alcohol was laminated on the surface of NR/BR vulcanized rubber with a thickness of 1 mm as a film with a film thickness of 100 µm, to produce a test piece of each example.

The rubber composition forming the vulcanized rubber in Examples 1 to 9 was made up of the following components:
natural rubber: 50 parts by mass;
butadiene rubber: 50 parts by mass;
paraffinic oil ("A/O MIX" made by JX Nippon Oil & Energy Corporation): 3 parts by mass;
carbon black ("Asahi NPG" made by Asahi Carbon Co., Ltd.): 50 parts by mass;
anisidine ("RAC-23" made by J&K Scientific Ltd., 3-methoxybenzeneamine): 3 parts by mass;
stearic acid ("MXST-L" made by Miyoshi Oil & Fat Co., Ltd.): 2 parts by mass;
zinc oxide ("HakusuiTech" made by Kyushu Hakusui Corporation): 3 parts by mass;
vulcanization accelerator ("Sanceler CM-G" made by Sanshin Chemical Industry Co., Ltd.): 0.2 parts by mass; and
insoluble sulfur ("Mu-cron OT-20" made by Shikoku Chemicals Corporation): 3 parts by mass.

### (Examples 10 to 11)

1 g PVA particles (Poval PVA117 made by Kuraray Co., Ltd.) were heated to melt in 30 mL DMSO (dimethylsulfoxide). After this, hexanoic acid was added by the amount shown in Table 1 (functional group compound addition amount (g)), 0.3 g 1-ethyl-3-(3-dimethylaminopropyl)carbodiimide hydrochloride was added, and the mixture was stirred at 40 °C for 6 hours. The reaction solution was subjected to reprecipitation in 500 mL methanol and filtration twice, and the solid was collected and dried to obtain a sample of modified polyvinyl alcohol of each example. The molecular weight (× 10³) of the main chain of the modified polyvinyl alcohol and the functional group introduction rate (mol%) of the modified polyvinyl alcohol are also shown in Table 1.

The sample of modified polyvinyl alcohol was laminated on the surface of NR/BR vulcanized rubber with a thickness of 1 mm as a film with a film thickness of 100 µm, to produce a test piece of each example. The rubber composition forming the vulcanized rubber was the same as that used in Examples 1 to 9.

### (Comparative Examples 1 and 2)

For Comparative Example 1, polystyrene butyl acrylate was prepared as a sample as shown in Table 1.

For Comparative Example 2, PVA ("Poval PVA117" made by Kuraray Co., Ltd.) was prepared as a sample as shown in Table 1.

The sample of modified polyvinyl alcohol was laminated on the surface of NR/BR vulcanized rubber with a thickness of 1 mm as a film with a film thickness of 100 µm, to produce a test piece of each comparative example. The rubber composition forming the vulcanized rubber was the same as that used in Examples 1 to 9.

### (Comparative Example 3)

1 g PVA particles ("Poval PVA117" made by Kuraray Co., Ltd.) were heated to melt in 30 mL DMSO (dimethylsulfoxide). After this, propionic acid was added by the amount shown in Table 1 (functional group compound addition amount (g)), 0.3 g 1-ethyl-3-(3-dimethylaminopropyl)carbodiimide hydrochloride was added, and the mixture was stirred at 40 °C for 6 hours. The reaction solution was subjected to reprecipitation in 500 mL methanol and filtration twice, and the solid was collected and dried to obtain a sample of modified polyvinyl alcohol of Comparative Example 3. The molecular weight (× 10³) of the main chain of the modified polyvinyl alcohol and the functional group introduction rate (mol%) of the modified polyvinyl alcohol are also shown in Table 1.

The sample of modified polyvinyl alcohol was laminated on the surface of NR/BR vulcanized rubber with a thickness of 1 mm as a film with a film thickness of 100 µm, to produce a test piece of Comparative Example 3. The rubber composition forming the vulcanized rubber was the same as that used in Examples 1 to 9.

### (Comparative Example 4)

1 g PVA particles (Poval PVA117 made by Kuraray Co., Ltd.) were heated to melt in 30 mL DMSO (dimethylsulfoxide). After this, docosanoic acid was added by the amount shown in Table 1 (functional group compound addition amount (g)), 0.9 g 1-ethyl-3-(3-dimethylaminopropyl)carbodiimide hydrochloride was added, and the mixture was stirred at 40 °C for 6 hours. The reaction solution was subjected to reprecipitation in 500 mL methanol and filtration twice, and the solid was collected and dried to obtain a sample of modified polyvinyl alcohol of Comparative Example 4.

The addition amount (g) of the docosanoic acid, the molecular weight (× 10³) of the main chain of the modified polyvinyl alcohol and the functional group introduction rate (mol%) of the modified polyvinyl alcohol are shown in Table 1.

### (Comparative Example 5)

A film with a film thickness of 100 µm made of the modified polyvinyl alcohol of Examples 1 to 9 was produced as a sample of Comparative Example 5.

**Table 1**

| Sample No. | Modified polyvinyl alcohol | | | | | Functional group compound addition amount (g) |
|---|---|---|---|---|---|---|
| | Type of main chain | Type of functional group | Functional group molecular weight | Main chain molecular weight ('10³) | Functional group I ntroduction rate (mol%) | |
| Comparative Example 1 | Polystyrene butyl acrylate | | - | 50 | - | - |
| Comparative Example 2 | PVA | - | 0 | 50 | 0 | 0 |
| Comparative Example 3 | PVA | Propionyl group | 57 | 50 | 10 | 0,2 |
| Comparative Example 4 | PVA | Docosanoyl group | 321 | 50 | 10 | 1 |
| Comparative Example 5 | PVA | Butyl glycidyl group | 115 | 50 | 0,4 | 0,003 |
| Example 1 | PVA | Butyl glycidyl group | 115 | 50 | 0,4 | 0,003 |
| Example 2 | PVA | Butyl glycidyl group | 115 | 50 | 1 | 0,05 |
| Example 3 | PVA | Butyl glycidyl group | 115 | 50 | 5 | 0,25 |
| Example 4 | PVA | Butyl glycidyl group | 115 | 50 | 10 | 0,5 |
| Example 5 | PVA | Butyl glycidyl group | 115 | 50 | 20 | 1 |
| Example 6 | PVA | Butyl glycidyl group | 115 | 50 | 30 | 1,5 |
| Example 7 | PVA | Butyl glycidyl group | 115 | 50 | 40 | 2 |
| Example 8 | PVA | Butyl glycidyl group | 115 | 50 | 50 | 2,5 |
| Example 9 | PVA | Butyl glycidyl group | 115 | 50 | 60 | 3 |
| Example 10 | PVA | Hexanoyl group | 109 | 50 | 10 | 0,3 |
| Example 11 | PVA | Hexanoyl group | 109 | 100 | 10 | 0,3 |

### (Evaluation)

### (1) Gas barrier property (oxygen transmission rate)

The sample of each of the examples and comparative examples was processed into a disk shape with a thickness of 1.1 mm and a diameter of 50 mm, and oxygen transmissivity was measured under the conditions of 0% in humidity and 25 °C in temperature using OX-TRAN model 2/20 made by Modern Controls, Inc. The measurement results are shown in Table 3. A lower oxygen transmission rate indicates a better result.

### (2) Flexibility-1 (breaking elongation)

For the sample of each of the examples and comparative examples, a test piece with a thickness of 1.1 mm was produced, and breaking elongation (Eb) was measured based on JIS 7161. In detail, breaking elongation (%) when pulling the test piece at a speed of 50 mm/min was measured. The measurement results are shown in Table 3. A higher breaking elongation value indicates a better result.

### (3) Flexibility-2 (tensile strength)

For the sample of each of the examples and comparative examples, a test piece with a thickness of 1.1 mm was produced, and tensile strength (Tb) was measured based on JIS K 6251. In detail, the dumbbell test piece (No. 3) was pulled to a break at a prescribed speed (50 ± 2.5 mm/min) using a tension test apparatus, and the maximum tension required to break the test piece was measured. The measurement results are shown in Table 3. A higher tensile strength value indicates a better result.

### (4) Static ozone crack test

The sample of each of the examples and comparative examples was fixed in a state of being pulled 25% under the environment of 40 °C in temperature and 50 pphm in ozone concentration, and whether or not cracking occurred after 1 day, after 2 days, and after 3 days was visually checked. The results (crack or no crack) are shown in Table 3. Less cracking indicates a better result.

### (5) Dynamic ozone crack test

The sample of each of the examples and comparative examples was repeatedly elongated and contracted ±10% (with a frequency of 1 Hz) under the environment of 40 °C in temperature and 50 pphm in ozone concentration, and whether or not cracking occurred and the state of cracking after 1 day, after 2 days, and after 3 days was visually checked. The results are shown in Table 3. Less cracking indicates a better result. The state of cracking was evaluated based on the following criteria (Table 2).

**[Table 2]**

| Number of cracks | Size and depth of crack |
|---|---|
| A: A few cracks | 1: Not visible to naked eye but observable with magnifier of 10 magnifications |
| B: Many cracks | 2: Visible to naked eye |
| C: Countless cracks | 3: Deep and relatively large crack (less than 1mm) |
| | 4: Deep and large crack (1mm or more and less than 3mm) |
| | 5: Crack of 3mm or more or state close to break |

### (6) Fatigue resistance (number of flexes)

The sample of each of the examples and comparative examples was cut to 50 films of 21 cm × 30 cm, and each cut film was humidity-controlled at 0 °C for 7 days. The cut film was then flexed 50 times, 75 times, 100 times, 125 times, 150 times, 175 times, 200 times, 225 times, 250 times, 300 times, 400 times, 500 times, 600 times, 700 times, 800 times, 1000 times, and 1500 times using Gelvo type Flex-Crack tester made by Rigaku Kogyo Co., Ltd. according to ASTM F392-74, and the number of pinholes was measured. For each number of flexes, the measurement was performed 5 times, and the average value was set as the number of pinholes. The measurement results were plotted with the horizontal axis representing the number of flexes (P) and the vertical axis representing the number of pinholes (N), and the number of flexes (Np1) when the number of pinholes was 1 was calculated by extrapolation, and rounded to two significant figures. For each film in which no pinhole was observed after 1500 flexes, the number of flexes was subsequently increased in units of 500 times, and the number of flexes with which a pinhole was observed was set to Np1.

The evaluation was made based on an index with the number of flexes of Comparative Example 1 being 100. A higher index indicates more flexes and higher fatigue resistance.

**[Table 3]**

| Sample No. | Evaluation | | | | | | | | | |
|---|---|---|---|---|---|---|---|---|---|---|
| | Oxygen transmission rate (cc/m². day·atm) | Breaking elongation (Eb) (□) | Tensile strength (Tb) (Mpa) | Static ozone crack resistance | | | Dynamic ozone crack resistance | | | Number of flexes |
| | | | | After 1 day | After 2 days | After 3 days | After 1 day | After 2 days | After 3 days | |
| Comparative Example 1 | 300 | 100 | | No crack | No crack | B-3 | No crack | B-3 | C-3 | 100 |
| Comparative Example 2 | 0.5 | 5 | 150 | No crack | No crack | No crack | B-3 | C-3 | C-4 | 30 |
| Comparative Example 3 | 1 | 20 | 120 | No crack | No crack | No crack | No crack | No crack | No crack | 30 |
| Comparative Example 4 | 100 | 50 | 50 | No crack | No crack | No crack | No crack | B-3 | C-3 | 60 |
| Comparative Example 5 | 0.5 | 110 | 80 | No crack | No crack | No crack | No crack | No crack | No crack | 90 |
| Example 1 | 0.5 | 100 | 90 | No crack | No crack | No crack | No crack | No crack | No crack | 120 |
| Example 2 | 0.6 | 100 | 85 | No crack | No crack | No crack | No crack | No crack | No crack | 120 |
| Example 3 | 0.8 | 150 | 80 | No crack | No crack | No crack | No crack | No crack | No crack | 150 |
| Example 4 | 1 | 250 | 70 | No crack | No crack | No crack | No crack | No crack | No crack | 150 |
| Example 5 | 2 | 250 | 65 | No crack | No crack | No crack | No crack | No crack | No crack | 150 |
| Example 6 | 10 | 250 | 65 | No crack | No crack | No crack | No crack | No crack | No crack | 170 |
| Example 7 | 20 | 250 | 65 | No crack | No crack | No crack | No crack | No crack | No crack | 170 |
| Example 8 | 50 | 250 | 70 | No crack | No crack | No crack | No crack | No crack | No crack | 120 |
| Example 9 | 70 | 250 | 70 | No crack | No crack | No crack | No crack | No crack | No crack | 120 |
| Example 10 | 1 | 200 | 80 | No crack | No crack | No crack | No crack | No crack | No crack | 120 |
| Example 11 | 1 | 210 | 90 | No crack | No crack | No crack | No crack | No crack | No crack | 110 |

The following was revealed from Table 3.

Regarding the gas barrier property and flexibility, the polystyrene butyl acrylate in Comparative Example 1 had appropriate flexibility, but the oxygen transmission rate was high and so the ozone transmissivity is expected to be high. The samples of Comparative Examples 2 to 5 and Examples 1 to 11 all showed high oxygen barrier property, and so their ozone transmissivity is expected to be low. Moreover, the samples of Examples 1 to 11 had improved breaking elongation while maintaining oxygen barrier property. This is probably because the functional group introduced in the side chain acted to relax the hydrogen-bonding network of the main chain appropriately (without significantly impairing the barrier property) so as to add ductility without a brittle break. In addition, as can be seen from Examples 6 to 9, the barrier property decreased as the amount of introduction of the functional group increased. Further, as can be seen from Examples 4 and 10, the type of grafted functional group did not significantly affect the result if the carbon number (molecular weight) was equal.

In the static ozone crack test, the PVA derivative (Comparative Examples 2 to 4 and Examples 1 to 11) showed high crack resistance as compared with the polymer with the acrylate backbone in Comparative Example 1. Regarding dynamic ozone crack resistance, on the other hand, the samples of Comparative Examples 2 to 4 had cracking. This is probably because, due to the lack of flexibility in the samples of Comparative Examples 2 to 4, fine fractures occurred in the film and the passage of ozone molecules through the film was facilitated. Meanwhile, Examples 1 to 11 had the same results as in the static ozone crack test.

Regarding the fatigue resistance, the samples of the resin compositions of Examples 1 to 11 had higher fatigue resistance than the samples of Comparative Examples 2 to 5, demonstrating that imparting flexibility led to improved fatigue resistance.

### INDUSTRIAL APPLICABILITY

It is thus possible to provide a laminate having high ozone crack resistance and excellent in flexibility and fatigue resistance, and a tire using the laminate and thus having excellent ozone crack resistance, flexibility, and fatigue resistance.

## Claims

1. A laminate comprising:
a coating film containing modified polyvinyl alcohol grafted by a functional group that is linear-chain, cycloaliphatic, branched or aromatic and has a molecular weight of 20 to 10000, and silica; and
a rubber layer in contact with the coating film.

2. The laminate according to claim 1,
wherein a carbon number of the functional group used for the grafting is 3 to 20.

3. The laminate according to claim 1 or 2,
wherein a proportion of introducing the functional group used for the grafting is 0.5 mol% to 50 mol% with respect to a vinyl alcohol unit in a main chain of the modified polyvinyl alcohol.

4. The laminate according to any one of claims 1 to 3,
wherein the modified polyvinyl alcohol is further grafted by an acrylic group-containing oligosilanol group, and a proportion of introducing the acrylic group-containing oligosilanol group is 0.5 mol% to 10 mol% with respect to a vinyl alcohol unit in a main chain of the modified polyvinyl alcohol.

5. The laminate according to any one of claims 1 to 4,
wherein a molecular weight of a main chain of the modified polyvinyl alcohol is 10000 or more.

6. The laminate according to claim 1, further comprising
a colored layer above or below the coating film.

7. The laminate according to any one of claims 1 to 6, wherein an average primary particle size of the silica measured by a transmission electron microscope (TEM) is 30 nm to 120 nm.

8. A tire using the laminate according to any one of claims 1 to 7.

## Patentansprüche

1. Laminat, umfassend:
einen Beschichtungsfilm enthaltend einen modifizierten Polyvinylalkohol gepfropft durch eine funktionelle Gruppe, welche geradkettig, cycloaliphatisch, verzweigt oder aromatisch ist und ein Molekulargewicht von 20 bis 10000 aufweist, und Siliciumdioxid (Silica); und
eine Kautschukschicht in Kontakt mit dem Beschichtungsfilm.

2. Laminat gemäß Anspruch 1, wobei eine Kohlenstoffanzahl der funktionellen Gruppe, die zum Pfropfen verwendet wird, 3 bis 20 beträgt.

3. Laminat gemäß Anspruch 1 oder 2, wobei ein Anteil des Einführens der funktionellen Gruppe, die zum Pfropfen verwendet wird, 0,5 Mol-% bis 50 Mol-% bezüglich einer Vinylalkoholeinheit in einer Hauptkette des modifizierten Polyvinylalkohols beträgt.

4. Laminat gemäß irgendeinem der Ansprüche 1 bis 3, wobei der modifizierte Polyvinylalkohol weiterhin durch eine Acrylgruppen-haltige Oligosilanolgruppe gepfropft ist, und ein Anteil des Einführens der Acrylgruppenhaltigen Oligosilanolgruppe 0,5 Mol-% bis 10 Mol-% bezüglich einer Vinylalkoholeinheit in einer Hauptkette des modifizierten Polyvinylalkohols beträgt.

5. Laminat gemäß irgendeinem der Ansprüche 1 bis 4, wobei ein Molekulargewicht einer Hauptkette des modifizierten Polyvinylalkohols 10000 oder mehr beträgt.

6. Laminat gemäß Anspruch 1, weiterhin umfassend eine farbige Schicht oberhalb oder unterhalb des Beschichtungsfilms.

7. Laminat gemäß irgendeinem der Ansprüche 1 bis 6, wobei eine durchschnittliche primäre Teilchengröße des Siliciumdioxids, gemessen durch ein Transmissionselektronenmikroskop (TEM), 30 nm bis 120 nm beträgt.

8. Reifen, bei dem das Laminat gemäß irgendeinem der Ansprüche 1 bis 7 verwendet wird.

## Revendications

1. Stratifié comprenant :
un film de revêtement contenant un poly(alcool vinylique) modifié greffé par un groupe fonctionnel qui est à chaine droite, cycloaliphatique, ramifié ou aromatique, et présente une masse moléculaire de 20 à 10 000, et de la silice ; et
une couche de caoutchouc en contact avec le film de revêtement.

2. Stratifié selon la revendication 1, dans lequel un nombre d'atomes de carbone du groupe fonctionnel utilisé pour le greffage est de 3 à 20.

3. Stratifié selon la revendication 1 ou 2, dans lequel une proportion d'introduction du groupe fonctionnel utilisé pour le greffage est de 0,5 % en moles à 50 % en moles par rapport à un motif alcool vinylique dans la chaine principale du poly(alcool vinylique) modifié.

4. Stratifié selon l'une des revendications 1 à 3, dans lequel le poly(alcool vinylique) modifié est en outre greffé par un groupe oligosilanol contenant un groupe acrylique, et une proportion d'introduction du groupe oligosilanol contenant un groupe acrylique est de 0,5 % en moles à 10 % en moles par rapport à un motif alcool vinylique dans la chaine principale du poly(alcool vinylique) modifié.

5. Stratifié selon l'une des revendications 1 à 4, dans lequel une masse moléculaire d'une chaine principale du poly(alcool vinylique) modifié est de 10000 ou plus.

6. Stratifié selon la revendication 1, comprenant en outre une couche colorée au-dessus ou en dessous du film de revêtement.

7. Stratifié selon l'une quelconque des revendications 1 à 6, dans lequel une granulométrie primaire moyenne de la silice mesurée par un microscope électronique en transmission (MET) est de 30 nm à 120 nm.

8. Pneu utilisant le stratifié selon l'une des revendications 1 à 7.
